(19) Europäisches Patentamt / European Patent Office / Office européen des brevets

(11) **EP 3 617 739 A1**

(12) **EUROPEAN PATENT APPLICATION**

(43) Date of publication:
04.03.2020 Bulletin 2020/10

(51) Int Cl.:
*G01S 7/41* *(2006.01)*  *G01S 13/56* *(2006.01)*
*G01S 7/292* *(2006.01)*  *G01S 7/35* *(2006.01)*

(21) Application number: 19192573.4

(22) Date of filing: 20.08.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.08.2018 JP 2018163496

(71) Applicant: AISIN SEIKI KABUSHIKI KAISHA
Kariya-shi,
Aichi 448-8650 (JP)

(72) Inventor: YAMAGUCHI, Soki
Kariya-shi, Aichi 448-8650 (JP)

(74) Representative: D Young & Co LLP
120 Holborn
London EC1N 2DY (GB)

(54) **OCCUPANT DETECTION APPARATUS**

(57) An occupant detection apparatus (22) includes an information acquisition unit (24) acquiring Doppler signals in a chronological order, a maximum value acquisition unit (26) performing a processing for successively sorting the Doppler signals into plural ports in a chronological order, accumulating the sorted Doppler signals which results in an accumulated value at each of the ports, and acquiring a maximum value of accumulated values at the respective ports, the maximum value acquisition unit varying the number of ports and performing the processing on each varied number of ports, a calculation unit (28) calculating a sum of maximum values acquired at the varied numbers of ports within a variation range where the number of ports is varied, and a determination unit (30) determining that the Doppler signals include occupant information indicating existence of an occupant (14) in a case where the sum of the maximum values is equal to or greater than a predetermined determination threshold value.

FIG. 2

**Description**

TECHNICAL FIELD

This disclosure generally relates to an occupant detection apparatus.

BACKGROUND DISCUSSION

A technique to perform vital sensing by transmitting and receiving detection waves (for example, sound waves and electromagnetic waves) is known. In a case where the detection waves are reflected from a human body, for example, the Doppler effect (Doppler signals) is obtainable, the Doppler effect where changes in relative speed between the human body and a transmitter-receiver unit which transmits and receives the detection waves occur due to breathing and heartbeats of the human body, for example, so that frequencies of the detection waves reflected from the human body and the detection waves transmitted from the transmitter-receiver unit are observed as being different from one another. The vital sensing is realized in a manner that certain periodicity is found in the Doppler signals based on analysis thereof and that such periodicity is estimated as a result of breathing of the human body, for example. The aforementioned technique is disclosed, for example, in "A Simple Parameter Estimation Method for Periodic Signals Applicable to Vital Sensing Using Doppler Sensors" SICE Journal of Control, Measurement, and System Integration, Vol. 10, No. 5, pp. 378-384, September 2017.

In a case where the aforementioned vital sensing is employed to detect whether or not an occupant exists at a vehicle interior, it may be considered that the vital sensing is performed on a basis of breathing of the occupant at the vehicle interior, for example. In this case, when it is assumed that a breathing cycle of the occupant (human body) is constant, it is easy to extract periodicity of the Doppler signals. Nevertheless, in a case where the occupant is talking, for example, fluctuations and/or randomness may be generated in breathing movement of the occupant. It is thus difficult to extract the breathing cycle, which may decrease accuracy of occupant detection.

A need thus exists for an occupant detection apparatus where fluctuations and randomness in Doppler signals are taken into account for vital sensing at a vehicle interior.

SUMMARY

According to an aspect of this disclosure, an occupant detection apparatus includes an information acquisition unit acquiring Doppler signals in a chronological order based on detection waves transmitted and received at a vehicle interior of a vehicle, a maximum value acquisition unit performing a processing for successively sorting the Doppler signals into plural ports in a chronological order, accumulating the sorted Doppler signals which results in an accumulated value at each of the ports, and acquiring a maximum value of accumulated values at the respective ports, the maximum value acquisition unit varying the number of ports and performing the processing on each varied number of ports, a calculation unit calculating a sum of maximum values acquired at the varied numbers of ports within a variation range where the number of ports is varied, and a determination unit determining that the Doppler signals acquired at the vehicle interior include occupant information indicating existence of an occupant in a case where the sum of the maximum values is equal to or greater than a predetermined determination threshold value.

Accordingly, instead of determining whether or not the Doppler signals include the occupant information based on whether or not the Doppler signals include periodicity, for example, the determination is performed on a basis of whether or not the sum of maximum values acquired at the varied numbers of ports is equal to or greater than the predetermined determination threshold value. As a result, even when the Doppler signals include fluctuations and/or randomness, the determination of whether or not the Doppler signals include the occupant information may be stably performed.

The calculation unit calculates a sum of the maximum values at the entire variation range of the varied numbers of ports.

Accordingly, the determination of whether or not the Doppler signals include the occupant information may be stably performed regardless of a length of a cycle of the Doppler signals, i.e., a breathing cycle of the occupant, for example.

The maximum value acquisition unit divides the variation range where the number of ports is varied into plural segments and acquires the maximum value per segment. The calculation unit calculates a partial sum serving as a sum of the maximum values at the respective segments. The determination unit determines that the Doppler signals acquired at the vehicle interior include the occupant information indicating existence of the occupant in a case where the partial sum is equal to or greater than a partial determination threshold value, the determination unit determining the number of occupants existing at the vehicle interior based on the number of segments where the partial sum is equal to or greater than the partial determination threshold value.

Accordingly, even when fluctuations and/or randomness appear in the occupant information, the determination of whether or not the Doppler signals include the occupant information may be stably performed at each segment. Based on the number of segments including the occupant information, the number of occupants existing at the vehicle interior is determinable.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a side view of a vehicle illustrating an interior of a vehicle where an occupant detection apparatus is mounted in a state where a portion of the interior is viewed transparently according to an embodiment disclosed here;
Fig. 2 is a block diagram illustrating a construction of the occupant detection apparatus according to the embodiment;
Fig. 3 is a schematic view explaining a maximum value detection processing performed by a maximum value acquisition unit of the occupant detection apparatus according to the embodiment;
Fig. 4 is an explanatory view illustrating a distribution of maximum values of accumulated values accumulated at respective ports and calculated by the maximum value acquisition unit of the occupant detection apparatus in a case where the number of ports is varied;
Fig. 5 is an explanatory view illustrating a distribution of maximum values of accumulated values accumulated at respective ports at each segment in a case where a variation range of the number of ports is divided into plural segments;
Fig. 6 is an explanatory view explaining a process of detecting a body motion of an occupant and explaining a calculation of a deviation of I signals in a case where IQ modulation is performed on Doppler signals according to the occupant detection apparatus of the embodiment;
Fig. 7 is an explanatory view explaining a process of detecting the body motion of the occupant and explaining a comparison between a sum of absolute values of deviations of the I signals and a threshold value; and
Fig. 8 is a flowchart illustrating a flow of an occupant detection processing according to the occupant detection apparatus of the embodiment.

DETAILED DESCRIPTION

An embodiment disclosed here is explained with reference to the attached drawings. Configurations of the embodiment described below, and operations, results, and effects brought by the configurations are examples. The embodiment is achievable by other configurations than the configurations disclosed as in the following embodiment. At least one of various effects based on the basic configurations and derived effects may be obtained.

In the embodiment, a vehicle 10 at which an occupant detection apparatus 22 is mounted may be an automobile including an internal combustion engine as a drive source (i.e., an internal combustion engine automobile), an automobile including an electric motor as a drive source (i.e., an electric automobile and a fuel cell automobile, for example), an automobile including both the internal combustion engine and the electric motor as a drive source (i.e., a hybrid automobile), or an automobile including a drive source different from the aforementioned drive sources, for example. In addition, the vehicle 10 may include any types of transmission devices and any types of devices (including systems and components, for example) for driving the internal combustion engine and the electric motor. A system, the number, and a layout, for example, of a device related to driving of wheels of the vehicle 10 may be appropriately employed or specified.

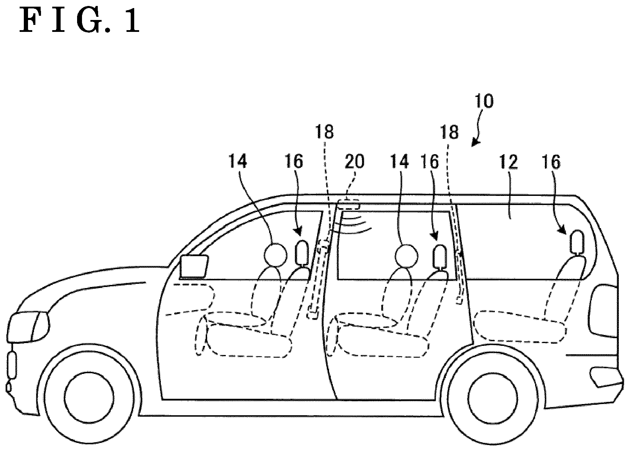

Plural seats 16 where occupants 14 are configured to be seated are provided at a vehicle interior 12 of the vehicle 10. In Fig. 1, the seats 16 serve as three-row seats where eight adults (two in a front row of seats, three in a middle row of seats, and two in a rear row of seats) can be seated, for example. Each of the seats 16 is equipped with a seatbelt 18 so that the occupant 14 in the seat 16 uses the seatbelt 18 during driving of the vehicle 10.

A transmitter-receiver unit 20 providing detection waves (for example, Doppler signals) to the occupant detection apparatus 22 which detects whether or not the occupant 14(s) exists at the vehicle interior 12 or detects the number of occupants 14 who exist at the vehicle interior 12 is fixed at a part of the vehicle interior 12, i.e., at a ceiling portion above the middle row seats, for example. The transmitter-receiver unit 20 transmits radio waves (microwaves) as an example of the detection waves, for example. The radio waves transmitted from the transmitter-receiver unit 20 are reflected from the occupant 14 in a case where the occupant 14 exists at the vehicle interior 12. In a case where a motion of the occupant 14 is obtained, frequencies of the aforementioned radio waves are shifted in proportion to a moving speed of the occupant (for example, a moving speed of the surface of the body of the occupant 14 such as breathing and heartbeats) because of the Doppler effect. The transmitter-receiver unit 20 receives and outputs the detection waves (Doppler signals) which are frequency-shifted because of the Doppler effect. Thus, the transmitter-receiver unit 20 may be a Doppler sensor utilizing the Doppler effect of radio waves. The transmitter-receiver unit 20 transmits radio waves including frequencies of 24 GHz as the detection waves, for example, to the vehicle interior 12 where the occupant 14 possibly exists. In the transmitter-receiver unit 20, a transmitting/receiving region where a biological signal of the occupant 14 who may be possibly seated on each of the seats 16 at the vehicle interior 12 is detectable, and transmission intensity are specified. The detection waves transmitted by the transmitter-receiver unit 20 penetrate through a material with low electric permittivity such as resin constituting each seat 16, for example, and are reflected from the occupant 14 and metal (a metallic portion), for example. Thus, the transmitter-receiver unit 20 receives the detection waves reflected from the occupant(s) 14 and/or the metallic portion at the vehicle interior 12. In a case where the detection waves received by the transmitter-receiver unit 20 are frequency-shifted, it is considered that the transmitter-receiver unit 20 receives the Doppler signals indicating possibility of existence of the occupant 14 at the vehicle interior 12.

A transmitter section and a receiver section of the transmitter-receiver unit 20 may be integrally provided or separately and individually provided. As in Fig. 1, the transmitter-receiver unit 20 is constructed so that the single transmitter-receiver unit 20 is able to detect all the occupants 14 who possibly exist at the vehicle interior 12. In another embodiment, the vehicle interior 12 may be divided into plural regions so that plural transmitter-receiver units 20 are provided at the respective regions. For example, the transmitter-receiver unit 20 for the seats 16 in the front row, the transmitter-receiver unit 20 for the seats 16 in the middle row, and the transmitter-receiver unit 20 for the seats 16 in the rear row may be provided. In this case, the transmitting/receiving region of the detection waves is limited, which may contribute to improvement of detection accuracy.

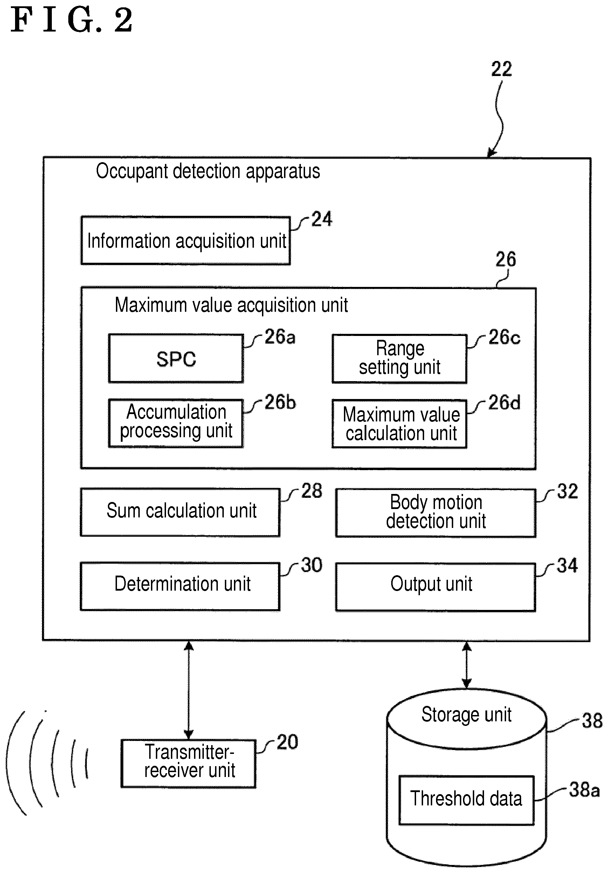

Fig. 2 is a block diagram schematically illustrating a construction of the occupant detection apparatus 22. As illustrated in Fig. 2, the occupant detection apparatus 22 and an information acquisition unit 24, a maximum value acquisition unit 26, a sum calculation unit 28, a determination unit 30, a body motion detection unit 32, and an output unit 34, for example, constituting the occupant detection apparatus 22 are realized at an onboard computer which is constituted by a central processing unit (CPU) (processor) and a storage unit 38, for example.

The information acquisition unit 24 acquires the Doppler signals in chronological order based on the detection waves transmitted and received by the transmitter-receiver unit 20 at the vehicle interior 12 of the vehicle 10. The information acquisition unit 24 constantly drives the transmitter-receiver unit 20 in a state where a power source of the vehicle 10 is turned on, for example, to thereby perform transmission and reception of the detection waves (radio waves). As mentioned above, the radio waves transmitted by the transmitter-receiver unit 20 are reflected from the occupant(s) 14 and the metallic portion. Even when the occupant 14 does not exist at the vehicle interior 12, for example, temporal variations (fluctuations) in frequencies of the reflected waves may occur due to vibrations of the engine of the vehicle 10 in an idling state or vibrations received from a road surface during driving of the vehicle 10. In a case where the occupant 14 exists at the vehicle interior 12, at least the chest position of the occupant 14 moves because of breathing and heartbeats thereof, which causes frequency-shift of the reflected waves in proportion to the moving speed of the chest position of the occupant 14. The information acquisition unit 24 acquires the Doppler signals (digital signals) reflecting such frequency variations as serial data.

The maximum value acquisition unit 26 successively sorts the Doppler signals acquired by the information acquisition unit 24 into plural ports in chronological order so that the Doppler signals are accumulated at each of the ports (which results in an accumulated value). The maximum value acquisition unit 26 then performs a processing for acquiring a maximum value among the accumulated values of the Doppler signals accumulated at the respective ports while varying the number of ports. The maximum value acquisition unit 26 includes a serial-parallel converter (SPC) 26a, an accumulation processing unit 26b, a range setting unit 26c, and a maximum value calculation unit 26d, for example.

In a case of detecting whether or not the occupant 14 exists at the vehicle interior 12 based on the Doppler signals acquired by the information acquisition unit 24, the occupant detection apparatus 22 according to the present embodiment determines the aforementioned existence on a basis of whether or not the Doppler signals include periodicity. For example, in a case where the occupant 14 is seated in the seat 16 at the vehicle interior 12, breathing of the occupant 14 is substantially stable and calm and expansion and construction of the lung of the occupant 14 occur at a substantially constant cycle. In a case where the occupant 14 exists at the vehicle interior 12, the information acquisition unit 24 may acquire the Doppler signals (serial signals) which vary substantially periodically. At this time, because a breathing cycle differs depending on each occupant 14, the occupant detection apparatus 22 first determines whether or not the Doppler signals acquired at the vehicle interior 12 include periodicity. The occupant detection apparatus 22 successively sorts the Doppler signals into the plural ports using the SPC 26a so as to detect periodicity of the Doppler signals serving as the serial data acquired by the information acquisition unit 24.

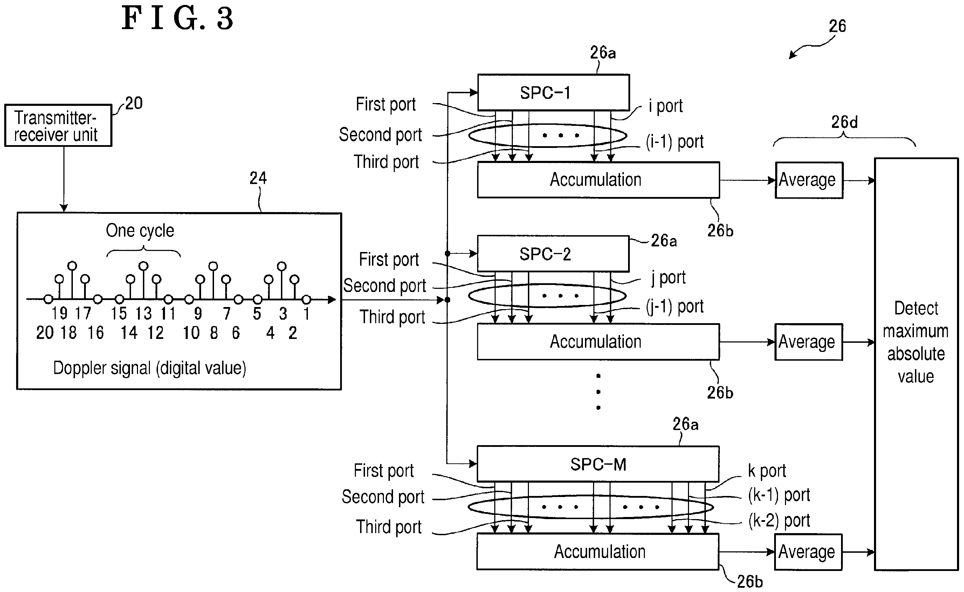

A configuration of the maximum value acquisition unit 26 and a maximum value detection processing performed by the maximum value acquisition unit 26 are explained with reference to Fig. 3. As mentioned above, the Doppler signals sent from the transmitter-receiver unit 20 and acquired by the information acquisition unit 24 are serial data. The SPC 26a is able to vary (change) the number of ports. For example, the SPC 26a specifies plural different numbers of ports in parallel (i.e., specifies plural groups of ports including different numbers of ports from one another) to successively sort the Doppler signals into the ports of each group. Specifically, the SPC 26a includes a SPC-1 which specifies the number of ports to three, a SPC-2 which specifies the number of ports to 4 ... and a SPC-M which specifies the number of ports to N, for example. Fig. 3 illustrates an example where the Doppler signals are sorted into the ports in the plural groups of ports in a chronological order by the SPC 26a in a case where the number of Doppler signals obtained within a predetermined determination period is 20, for example. In Fig. 3, the Doppler signals acquired by the information acquisition unit 24 are newer towards a left side (i.e., a code 20 is the newest) and are older towards a right side (i.e., a code 1 is the oldest). The Doppler signals (serial signals) illustrated in Fig. 3 include the breathing cycle of five as an example for easy explanation. In this case, the Doppler signals are serial signals where a large signal value appears per five signals. In practice, whether breathing information (periodic information) is included in the Doppler signals acquired by the information acquisition unit 24 is uncertain. Even when the breathing information is included in the Doppler signals, the breathing cycle is uncertain with the Doppler signals in a state of serial signals.

In a case where the number of ports specified by the SPC-1 is three (i=3), for example, the Doppler signals 1, 4, 7, 10, 13, 16 and 19 are assigned to a first port specified by the SPC-1. In the same manner, the Doppler signals 2, 5, 8, 11, 14, 17 and 20 are assigned to a second port specified by the SPC-1. The Doppler signals 3, 6, 9, 12, 15 and 18 are assigned to a third port specified by the SPC-1. In a case where the number of ports specified by the SPC-2 is four (j=4), the Doppler signals 1, 5, 9, 13 and 15 are assigned to a first port specified by the SPC-2. The Doppler signals 2, 6, 10, 14 and 18 are assigned to a second port specified by the SPC-2. The Doppler signals 3, 7, 11, 15 and 19 are assigned to a third port specified by the SPC-2. The Doppler signals 4, 8, 12, 16 and 20 are assigned to a fourth port specified by the SPC-3. In a case where the number of ports specified by the SPC-3 is five, the Doppler signals 1, 6, 11, and 16 are assigned to a first port specified by the SPC-3. The Doppler signals 2, 7, 12, and 17 are assigned to a second port specified by the SPC-3. The Doppler signals 3, 8, 13, and 18 are assigned to a third port specified by the SPC-3. The Doppler signals 4, 9, 14, and 19 are assigned to a fourth port specified by the SPC-3. The Doppler signals 5, 10, 15, and 20 are assigned to a fifth port specified by the SPC-3. In the following, in the same manner, the Doppler signals are assigned to respective ports based on the number of ports (k).

Accordingly, the Doppler signals sorted into the ports in the respective groups specified by the SPC 26a (i.e., the SPC-1, the SPC-2 ... and the SPC-M) are accumulated at the respective ports in each group by the accumulation processing unit 26b. In a case where the number of ports specified by the SPC 26a matches the cycle of the Doppler signals, large Doppler signal values are periodically concentrated at any one of the ports, for example, which results in remarkable increase of the accumulated value at the aforementioned port. In addition, small Doppler signal values are concentrated at the other one of the ports, for example, which results in decrease of the accumulated value at the aforementioned port. On the other hand, in a case where the number of ports of the SPC 26a is inhibited from matching the cycle of the Doppler signals, the magnitudes of the accumulated values (Doppler signal values) at the respective ports in each of the groups vary and no remarkable differences appear between the accumulated values.

That is, in comparison between respective maximum values of the accumulated values obtained in the respective groups of ports, the maximum value obtained in a case where the number of ports and the cycle of the Doppler signals conform to each other is greater than the maximum value obtained in a case where the number of ports and the cycle of the Doppler signals are inhibited from conforming to each other. Thus, the maximum value calculation unit 26d determines (selects) the accumulated value of which absolute value is maximum (i.e., a maximum accumulated value or a maximum absolute value) as a representative value for each group of ports specified by the SPC 26a (i.e., the SPC-1, the SPC-2 ... and the SPC-M). The maximum value calculation unit 26d then compares the respective maximum accumulated values (maximum absolute values) of the respective groups of ports. In a case where one of the maximum accumulated values (i.e., specific maximum accumulated value) is significantly greater than the other of the maximum accumulated values, such maximum accumulated value indicates that the cycle of the Doppler signals and the number of ports including the aforementioned specific maximum accumulated value match each other. That is, in a case where the Doppler signals acquired by the information acquisition unit 24 include certain periodicity, it may be assumed that an object moving at a regular cycle is present, i.e., the occupant 14 making breathing movement exists, at the vehicle interior 12, for example.

In a case where the number of Doppler signals of a determination target is constant, i.e., the number of Doppler signals is 20, for example, the number of Doppler signals accumulated at each port (i.e., the accumulation number) increases with the less number of ports specified by the SPC 26a. Therefore, when detecting the maximum absolute value (maximum accumulated value) of the accumulated values of the Doppler signals sorted into the ports in the respective groups, the maximum value calculation unit 26d first obtains an average accumulated value at each port and then detects the maximum absolute value. For example, in a case of the SPC-1 (26a) which specifies the number of ports to three, the accumulation number of the Doppler signals at the first port is seven. Thus, the accumulated value at the first port is divided by seven to be averaged. In the same manner, in a case of the SPC-2 (26a) which specifies the number of ports to four, the accumulation number of the Doppler signals at the first port is five. Thus, the accumulated value at the first port is divided by five to be averaged. In a case of the SPC-3 (26a), the accumulation number of the Doppler signals at the first port is four. Thus, the accumulated value at the first port is divided by four to be averaged.

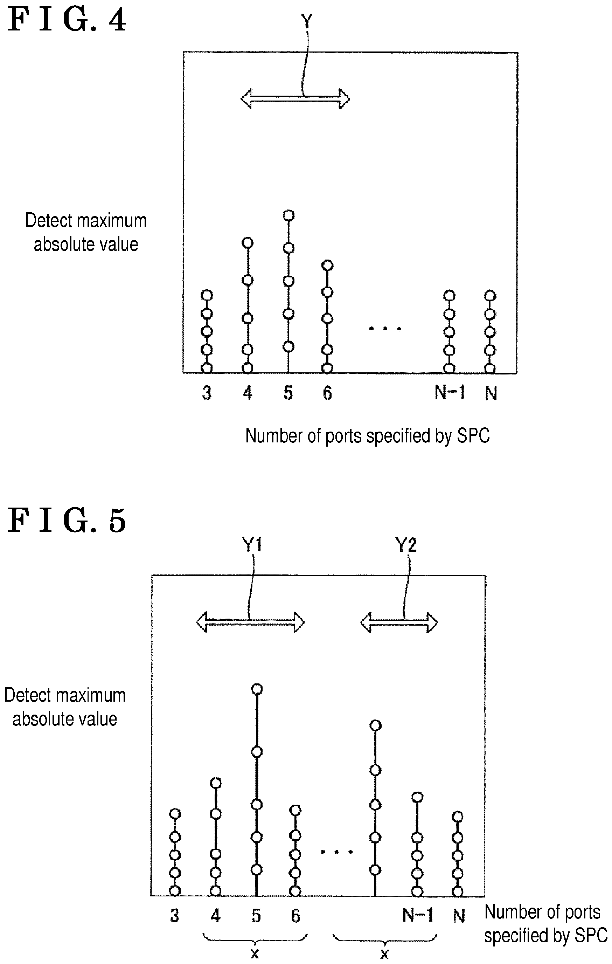

Fig. 4 is a graph where the maximum accumulated values (maximum absolute values) of the respective groups of ports specified by the SPC 26a, the maximum accumulated values being detected by the maximum value calculation unit 26d, are shown next to one another. As mentioned above, in a case where the specific maximum accumulated value is significantly greater than the other of the maximum accumulated values, such maximum accumulated value indicates that the Doppler signals include certain periodicity and corresponds to breathing information (breathing movement) indicating that the occupant 14 who makes breathing movement exists at the vehicle interior 12. That is, depending on how the maximum accumulated values of the Doppler signals appear, whether or not the breathing information (breathing movement) is present (i.e., whether or not the occupant 14 exists at the vehicle interior 12) is detectable. Nevertheless, even when the occupant 14 is seated on the seat 16 while being relaxed at the vehicle interior 12, fluctuations (disturbance) in breathing and heartbeats may occur or random breathing cycle may be generated when the occupant 14 is talking, for example. As illustrated in Fig. 4, the maximum accumulated value of the Doppler signals is large at a region Y corresponding to the number of ports equal to four, five and six, as compared to the other number of ports such as three and N-1, for example. Nevertheless, clear differences may not be determined and therefore it may be difficult to identify the number of ports which conforms to the cycle of the Doppler signals. That is, the periodicity of the Doppler signals is unclear and ambiguous and therefore accuracy in determining whether or not the occupant 14 exists at the vehicle interior 12 based on characteristics of the Doppler signals may decrease.

Therefore, according to the occupant detection apparatus 22 of the embodiment, the sum calculation unit 28 serving as a calculation unit calculates a sum of the maximum accumulated values acquired at the varied numbers of ports (i.e., at the respective groups of ports) within a range (a variation range) where the number of ports is varied by the SPC 26a (i.e., an entire range of the plural different numbers of ports specified by the SPC-1, the SPC-2 ... and the SPC-M). In a case where the sum of the maximum accumulated values calculated by the sum calculation unit 28 is equal to or greater than a predetermined determination threshold value (i.e., a threshold value A), the determination unit 30 determines that the Doppler signals obtained at the vehicle interior 12 include occupant information (breathing information). That is, the determination unit 30 determines that the breathing information is obtained (i.e., the occupant 14 exists at the vehicle interior 12) when "Formula 1" below is satisfied. In a case where "Formula 2" below is satisfied, the determination unit 30 determines that the breathing information is not obtained (i.e., the occupant 14 does not exist at the vehicle interior 12).

[Mathematical 1]

$$\sum_{N-M+1}^{SPC=N} (maximum\ absolute\ value) \geq threshold\ value\ A$$

(Formula 1)

[Mathematical 2]

$$\sum_{N-M+1}^{SPC=N} (maximum\ absolute\ value) < threshold\ value\ A$$

(Formula 2)

At this time, the threshold value A for determining whether or not the breathing information is obtained is a value determined beforehand by experiment, for example, based on variations of the number of ports which is varied by the SPC 26a (in a case of the SPC-1 to the SPC-N, the number of variations is "N"). The threshold value A is stored as threshold data 38a at the storage unit 38, for example, so that the determination unit 30 reads out and refers to the threshold data 38a at the time of determination.

As mentioned above, instead of estimating periodicity of breathing movement based on how the maximum accumulated values appear, the determination unit 30 obtains and grasps overall tendency of breathing information by calculating the sum of the maximum accumulated values which is compared with the predetermined threshold value for determination so as to determine whether or not the breathing movement is obtained. As a result, even when fluctuations and/or randomness appear in breathing movement of the occupant 14, it is possible to determine whether or not the breathing movement is obtained at the vehicle interior 12, i.e., whether or not the occupant 14 exists at the vehicle interior 12, which may increases accuracy of occupant detection. A typical adult makes approximately fifteen times of breathing movement per 60 seconds, for example. Thus, in order to extract whether or not the Doppler signals include periodicity, the occupant detection apparatus 22 performs data collection for 60 seconds which serves as one set of data collection so as to perform a processing for determining whether or not the breathing movement is obtained. As a result, more accurate determination may be achieved. A length of a time period where data collection is performed may be appropriately changed.

In a case where the plural occupants 14 exist at the vehicle interior 12, there is less possibility that breathing cycles of all the occupants 14 completely match one another. Fig. 5 is a graph showing the maximum accumulated values (absolute values) of the respective groups of ports including different numbers of ports specified by the SPC 26a in a state where the maximum accumulated values are indicated side by side. As illustrated in Fig. 5, a distribution of the maximum accumulated values is dispersed. In a case where the sum of the maximum accumulated values at the entire range is calculated as in Formulas 1 and 2, the determination of whether or not the occupant 14 exists at the vehicle interior 12 is achievable. Nevertheless it is impossible to estimate the number of occupants 14 at the vehicle interior 12. Therefore, the range setting unit 26c of the maximum value acquisition unit 26 is configured to divide the variation range where the number of ports is varied by the SPC 26a (i.e., the entire range of the plural groups of ports including the different numbers of ports specified by the SPC-1, the SPC-2 ... and the SPC-M) into plural segments. For example, each of the segments may include five groups of ports (x=5). Specifically, a first segment includes groups of ports including the number of ports from 3 to 7, a second segment includes the groups of ports including the number of ports from 8 to 12, and a third segment includes the groups of ports including the number of ports from 13 to 17, for example. At this time, the sum calculation unit 28 calculates a partial sum of the maximum accumulated values at the groups of ports specified by the SPC 26a within the corresponding segment. In a case where the partial sum of the maximum accumulated values calculated by the sum calculation unit 28 is equal to or greater than a partial determination threshold value (i.e., a threshold value B), the determination unit 30 determines that the occupant information (breathing information) indicating existence of the occupant 14 is included in the Doppler signals acquired at the vehicle interior 12. That is, the determination unit 30 determines that the breathing information is obtained (i.e., the occupant 14 exists) at the corresponding segment serving as a determination target when "Formula 3" below is satisfied. In a case where "Formula 4" below is satisfied, the determination unit 30 determines that the breathing information is not obtained (i.e., the occupant 14 does not exist) at the segment serving as the determination target.

[Mathematical 3]

$$\sum_{N-M+1}^{SPC=N-M+1+x} (maximum\ absolute\ value) \geq threshold\ value\ B$$

(Formula 3)

[Mathematical 4]

$$\sum_{N-M+1}^{SPC=N-M+1+x} (maximum\ absolute\ value) < threshold\ value\ B$$

(Formula 4)

The sum calculation unit 28 and the determination unit 30 perform the same processing on each segment divided by the range setting unit 26c to determine whether or not the breathing information (occupant information) is obtained at each segment. The determination unit 30 may determine the number of occupants 14 at the vehicle interior 12 based on the number of segments where the breathing information is obtained. The number of segments divided by the range setting unit 26c, i.e., the number of segments including the respective numbers of ports (for example, 3 to N) specified by the SPC 26a is determined on a basis of experiment, for example, by referring the breathing cycle of the typical occupant 14 (for example, an adult male or an adult female) and is stored at the storage unit 38 as the threshold data 38a.

Accordingly, instead of estimating periodicity of breathing movement on a basis of how the maximum accumulated vales appear, the determination unit 30 calculates the partial sum of the maximum accumulated values included in each of the segments divided by the range setting unit 26c of the maximum value acquisition unit 26. Thus, the determination unit 30 obtains and grasps tendency of breathing movement of each occupant 14 who may exist at the vehicle interior 12 and determines whether or not the tendency of breathing movement is obtained per segment by comparing the acquired partial sum of the maximum accumulated value with the predetermined partial threshold value. Even when fluctuations and randomness appear in breathing information of the occupant 14, whether or not the breathing movement is obtained at the vehicle interior 12, i.e., whether or not the occupant 14 exists at the vehicle interior 12, and the number of occupants 14 are determinable, which may increase accuracy of occupant detection.

As mentioned above, in a case of determining whether or not the breathing information (breathing movement) is present on a basis of the Doppler signals acquired at the vehicle interior 12, the determination is made by focusing the periodicity of the Doppler signals. Nevertheless, in a case where a body motion of the occupant 14 is found at the vehicle interior 12, i.e., the occupant 14 moves one's hand or leg or changes one's posture, for example, the aforementioned body motion generally does not include periodicity and includes randomness. It may be considered that the Doppler signals acquired in a state where the body motion of the occupant 14 appears include less periodicity. In addition, variations (fluctuations) in the Doppler signals in a state where the body motion appears are large, which may cause difficulty in extracting the periodicity of the Doppler signals in response to the breathing movement. Therefore, when it is determined on a basis of the Doppler signals that whether or not the breathing information (breathing movement) is obtained, a determination condition corresponds to virtually no body motion of the occupant 14. Specifically, the detection of whether or not the breathing information (breathing movement) is obtained on a basis of the Doppler signals realized by the occupant detection apparatus 22 is accurately performed in a case where a substantive movement of an object at the vehicle interior 12 is small or a case where a substantive movement is not found and thus the state of the vehicle interior 12 is difficult to be determined.

Therefore, the occupant detection apparatus 22 includes the body motion detection unit 32 detecting a certain degree of movement of an object, i.e., detecting a body motion. Thus, the determination unit 30 may determine that the occupant 14 exists at the vehicle interior 12 in a case where the body motion is confirmed or the breathing movement is confirmed.

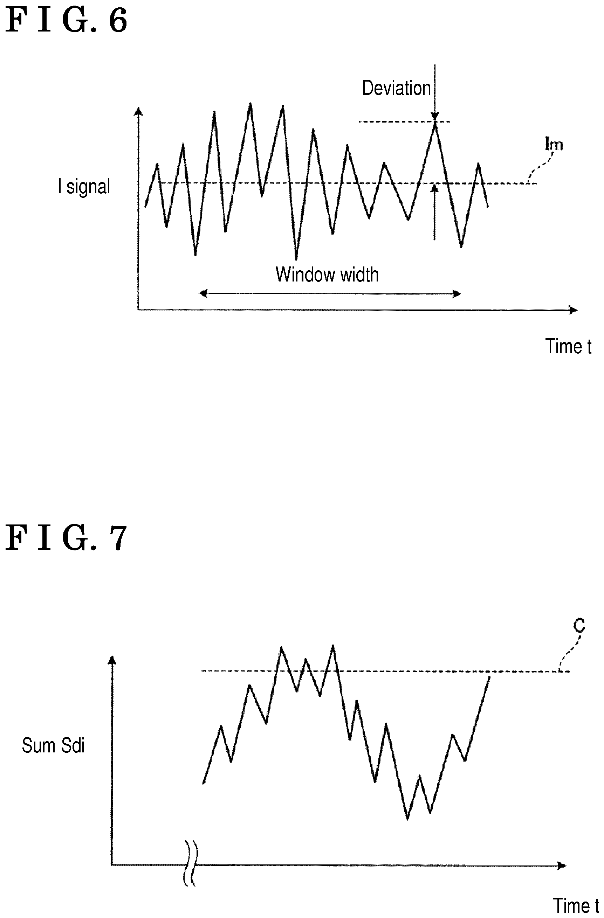

The body motion detection unit 32 may utilize the Doppler signals acquired by the information acquisition unit 24 for detecting the body motion. As mentioned above, in a case where the radio waves are radiated to a target object (for example, the occupant 14) from the transmitter-receiver unit 20, frequencies of the radio waves reflected from the target object are shifted in proportion to a moving speed of the target object because of the Doppler effect. The transmitter-receiver unit 20 receives the reflected waves and outputs IQ signals (detection wave signals) of a phase of the transmitting wave and the receiving wave to the information acquisition unit 24. Upon acquisition of the IQ signals via the information acquisition unit 24, the body motion detection unit 32 calculates an average value of I signals and an average value of Q signals and also calculates a deviation of each I signal from the average value thereof and a deviation of each Q signal from the average value thereof. Fig. 6 is a diagram of an image for calculating deviations of I signals from the average value. In this case, an average value Im is calculated at a predetermined window width (for example, a sampling time of 2 ms) so that the body motion detection unit 32 obtains the deviation of each I signal from the average value Im. The same processing is applied to the Q signals.

Next, the body motion detection unit 32 calculates a sum of absolute values of the deviations for the I signals (i.e., a sum Sdi) based on "Formula 5" below. In the same manner, the body motion detection unit 32 calculates a sum of absolute values of the deviations for the Q signals (i.e., a sum Sdq) based on "Formula 6" below.

[Mathematical 5]

$$Sdi = \sum_{t=1}^{n} |I(t) - Im|$$

(Formula 5)

[Mathematical 6]

$$Sdq = \sum_{t=1}^{n} |Q(t) - Qm|$$

(Formula 6)

The body motion detection unit 32 compares the sum Sdi of the absolute values of the deviations of the I signals with a predetermined body motion threshold value C. In a case where the sum Sdi is equal to or greater than the body motion threshold value C, the body motion detection unit 32 determines that the receiving waves (the Doppler signals) received by the transmitter-receiver unit 20 include information of existence of a moving object at the vehicle interior 12. In the same manner, the body motion detection unit 32 compares the sum Sdq of the absolute values of the deviations of the Q signals with the predetermined body motion threshold value C. In a case where the sum Sdq is equal to or greater than the body motion threshold value C, the body motion detection unit 32 determines that the receiving waves (the Doppler signals) received by the transmitter-receiver unit 20 include information of existence of a moving object at the vehicle interior 12. In this case, the body motion detection unit 32 determines that a greater movement than the breathing movement (for example, the body movement of the occupant 14) is present at the vehicle interior 12. That is, the body motion detection unit 32 is able to determine that the occupant 14 exists at the vehicle interior 12. Fig. 7 is a diagram of an image of comparison between the sum Sdi of the absolute values of the deviations of the I signals and the body motion threshold value C. The comparison between the sum Sdq of the absolute values of the deviations of the Q signals and the body motion threshold value C generates the same image. The body motion detection unit 32 is configured to detect whether or not a movement which can be regarded as the body motion is present at the vehicle interior 12. Nevertheless, even when the movement regarded as the body motion is detected, the number of occupants 14 existing at the vehicle interior 12 is not detectable. On the other hand, in a case where the breathing movement is detected, the number of occupants 14 existing at the vehicle interior 12 is detectable as explained with reference to Fig. 5 in the above.

The body motion detection unit 32 may determine that the body motion is present in a case where the sum Sdi of the absolute values of the deviations of the I signals is equal to or greater than the body motion threshold value C or the sum Sdq of the absolute values of the deviations of the Q signals is equal to or greater than the body motion threshold value C. Alternatively, because the I signal and the Q signal are different from each other only in a phase by 90 degrees, either the determination based on the I signals or the determination based on the Q signals may be performed.

The output unit 34 outputs information based on the determination result to the other system(s) mounted at the vehicle or an external system while timely updating the determination result of the determination unit 30. The breathing information (vital information) of the occupant 14 at the vehicle interior 12 which is determined by the occupant detection apparatus 22 according to the present embodiment may be utilized for controlling the vehicle 10, for example. Specifically, the breathing information is applicable to controlling an air-conditioning apparatus mounted at the vehicle 10, confirming whether or not the occupant wears a seatbelt, and controlling traction and braking of the vehicle 10, for example. In a case where an error is found in breathing movement of the occupant 14 at the vehicle interior 12 (i.e., detected breathing cycle suddenly fluctuates, for example), an emergency signal or a rescue signal may be sent to an external center or facility, for example. In addition, in a case where an error of the vehicle 10 is found in cooperation with the other sensor(s) mounted at the vehicle 10, a control of warning may be performed. For example, a temperature at the vehicle interior 12 obtained by an interior temperature sensor increases over a threshold value even though the occupant 14 exists at the vehicle interior 12, an emergency signal or a rescue signal may be transmitted to an outside center of facility or an operation to alert the error of the vehicle 10 to surroundings is performed. For example, flashing of a headlight, an alarm by a car horn or voice, and an output of alerting message may be performed. The breathing information (vital information) is applicable to various controls besides the aforementioned examples.

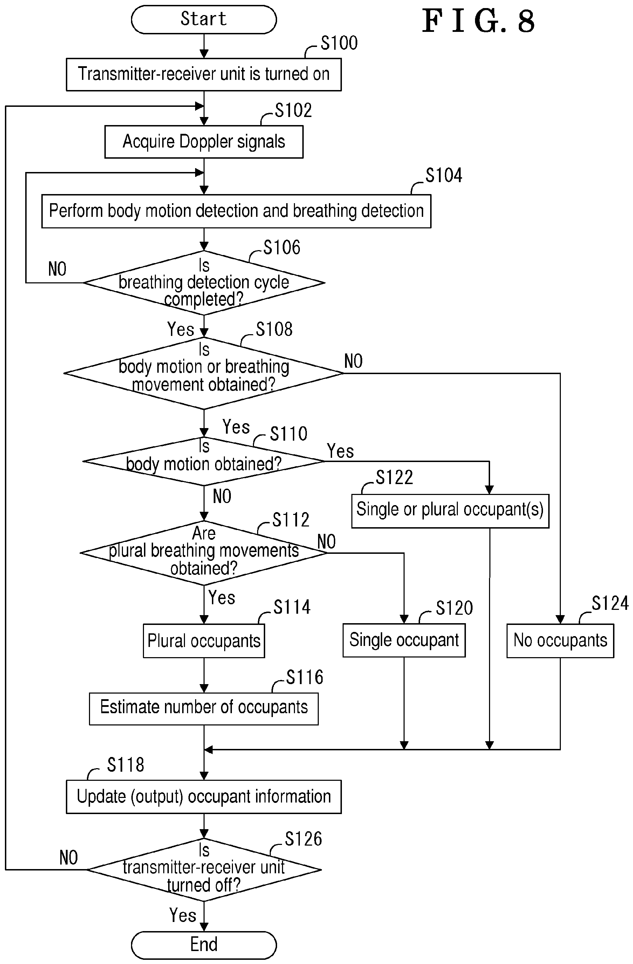

An operation of the occupant detection apparatus 22 constructed in the aforementioned manner is explained with reference to a flowchart illustrated in Fig. 8. In the following example, the occupant detection apparatus 22 detects the body motion and the breathing movement (breathing information) at the vehicle interior 12 in parallel with each other. In the detection of breathing movement, as in the explanation with Fig. 5, the range setting unit 26c divides the variation range (for example, 3 to N) where the SPC 26a changes or varies the number of ports (i.e., where the SPC 26a specifies plural groups of ports including different numbers of ports from one another) into plural segments so that whether or not the breathing movement (breathing information) is obtained is detected at each segment. That is, in a case where the breathing movement is obtained, the number of occupants 14 at the vehicle interior 12 is estimated on a basis of the number of breathing movements.

The transmitter-receiver unit 20 is constantly activated (i.e., a power source of the transmitter-receiver unit 20 is turned on) in a case where a power source of the vehicle 10 is turned on, for example, so as to transmit and receive radio waves (S100). The information acquisition unit 24 is thus brought in a state to constantly acquire the Doppler signals in a case where the power source of the transmitter-receiver unit 20 is turned on (S102). The occupant detection apparatus 22 determines whether or not the body motion and the breathing movement (breathing information) are obtained at the vehicle interior 12 by the processing of the maximum value acquisition unit 26, the sum calculation unit 28, the body motion detection unit 32, and the determination unit 30. That is, the occupant detection apparatus performs a body motion detection and a breathing detection. (S104). As mentioned above, the determination of whether or not the body motion is obtained may be performed for a short time period, however, the estimation of the number of occupants 14 at the vehicle interior 12 is impossible when the body motion is present. On the other hand, the determination of whether or not the breathing movement is obtained takes longer time (for example, 60 seconds) than the determination of the body motion, however, the number of occupants 14 at the vehicle interior 12 may be estimated when the breathing movement is present. Therefore, the determination unit 30 holds the determination of whether or not the occupant 14 exists (No at S106). That is, the determination unit 30 repeats the operation of S104. Upon completion of breathing detection cycle (i.e., when a breathing detection cycle has elapsed) (Yes at S106), the determination unit 30 determines whether or not the body motion or the breathing movement is obtained (S108). In a case where the body motion or the breathing movement is obtained (Yes at S108) and the body motion is not obtained (No at S110), i.e., the breathing movement is present, the determination unit 30 confirms the number of breathing movements (breathing information) (S112). For example, in a case where the determination unit 30 determines whether or not the breathing information (breathing movement) is obtained for each segment and the plural breathing movements are obtained (Yes at S112), the determination unit 30 determines that the plural occupants 14 exist at the vehicle interior 12 (S114) and estimates the number of occupants 14 based on the number of segments where it is determined that the breathing movement (breathing information) is present (S116). The output unit 34 updates the occupant information with newest determination result upon receiving the occupant information from the determination unit 30 and outputs the updated occupant information to an onboard system or a system outside the vehicle (S118).

In a case where the determination unit 30 determines that the number of breathing movements is not plural (No at S112), the determination unit 30 estimates that the number of occupants 14 at the vehicle interior 12 is one (S120). The output unit 34 updates the occupant information to "single occupant" and outputs the updated occupant information to an onboard system or a system outside the vehicle (S118). In a case where the body motion detection unit 32 detects the body motion (Yes at S110), the determination unit 30 determines that the occupant(s) 14 exists at the vehicle interior 12 though the number of occupants 14 is unknown (S122). The output unit 34 updates the occupant information to "single or plural occupant(s), number is unknown" and outputs the updated occupant information to the onboard system and/or the system outside the vehicle (S118). In a case where it is determined that neither the body motion nor the breathing movement exists (No at S108), the determination unit 30 estimates "no occupants" at the vehicle interior 12 (S124). The output unit 34 updates the occupant information to "no occupants" and outputs the updated occupant information to the onboard system and/or the system outside the vehicle (S118).

Once the occupant information is output, it is determined whether or not the transmitter-receiver unit 20 is turned off (S126). In a case where the transmitter-receiver unit 20 is not turned off (No at S126), the operation proceeds to S102 so that the acquisition of the Doppler signals is maintained and the aforementioned processing is repeated to determine whether or not the occupant 14 exists at the vehicle interior 12. In a case where the transmitter-receiver unit 20 is turned off (Yes at S126), i.e., when the power source of the vehicle 10 is turned off, for example, the present flow is terminated to finish the detection of the occupant 14. In another embodiment, after the power source of the vehicle 10 is turned off, the detection of the occupant 14 at the vehicle interior 12 may be maintained for a predetermined time period (for example, 60 minutes). In this case, leaving a child in the car, for example, which is considered a social issue, is detectable. When the existence of the occupant 14 is confirmed at the vehicle interior 12 after the power source of the vehicle 10 is turned off, an alarm or an alert may be issued. In this case, the occupant detection apparatus 22 may be operated by an auxiliary power source of the vehicle 10, for example. At this time, a cancel switch may be provided, for example, so as to stop the occupant detection when the occupant 14 intentionally stays at the vehicle interior 12.

According to the flowchart in Fig. 8, determination of whether or not the breathing information is obtained is performed and, in a case where the presence of the breathing information is determined, the number of occupants 14 also is estimated. In another embodiment, whether or not the breathing information is obtained may be determined first. In a case where the presence of the breathing information is determined, the segments of the variation range where the number of ports is varied by the SPC 26a (i.e., where the plural groups of ports are specified by the SPC 26a) are then specified so as to estimate the number of occupants 14. The determination of whether or not the breathing information is obtained is conducted on each of the segments to estimate the number of occupants 14. Alternatively, the estimation of the number of occupants 14 may be omitted. That is, the processing explained with reference to Fig. 4 is only performed so that all groups of ports including the plural different numbers of ports specified by the SPC 26a entirely serve as a determination target. In this case, the determination of whether or not the occupant 14 exists at the vehicle interior 12 is performed by either the body motion detection or the breathing detection.

The present embodiment is not limited to include the aforementioned constructions and may be appropriately changed or modified.

## Claims

1. An occupant detection apparatus (22), comprising

    an information acquisition unit (24) acquiring Doppler signals in a chronological order based on detection waves transmitted and received at a vehicle interior (12) of a vehicle (10);
    a maximum value acquisition unit (26) performing a processing for successively sorting the Doppler signals into a plurality of ports in a chronological order, accumulating the sorted Doppler signals which results in an accumulated value at each of the ports, and acquiring a maximum value of accumulated values at the respective ports, the maximum value acquisition unit (26) varying the number of ports and performing the processing on each varied number of ports;
    a calculation unit (28) calculating a sum of maximum values acquired at the varied numbers of ports within a variation range where the number of ports is varied; and
    a determination unit (30) determining that the Doppler signals acquired at the vehicle interior (12) include occupant information indicating existence of an occupant (14) in a case where the sum of the maximum values is equal to or greater than a predetermined determination threshold value.

2. The occupant detection apparatus according to claim 1, wherein the calculation unit (28) calculates a sum of the maximum values at the entire variation range of the varied numbers of ports.

3. The occupant detection apparatus according to claim 1, wherein

the maximum value acquisition unit (26) divides the variation range where the number of ports is varied into a plurality of segments and acquires the maximum value per segment,
the calculation unit (28) calculates a partial sum serving as a sum of the maximum values at the respective segments,
the determination unit (30) determines that the Doppler signals acquired at the vehicle interior (12) include the occupant information indicating existence of the occupant in a case where the partial sum is equal to or greater than a partial determination threshold value, the determination unit (30) determining the number of occupants existing at the vehicle interior (12) based on the number of segments where the partial sum is equal to or greater than the partial determination threshold value.

# FIG. 1

# FIG. 2

22

**Occupant detection apparatus**

Information acquisition unit — 24

26

Maximum value acquisition unit

SPC — 26a

Range setting unit — 26c

Accumulation processing unit — 26b

Maximum value calculation unit — 26d

Sum calculation unit — 28

Body motion detection unit — 32

Determination unit — 30

Output unit — 34

Transmitter-receiver unit — 20

Storage unit — 38

Threshold data — 38a

# FIG. 3

EP 3 617 739 A1

# FIG. 4

Detect maximum absolute value

Number of ports specified by SPC

# FIG. 5

Detect maximum absolute value

Number of ports specified by SPC

# F I G. 6

# F I G. 7

FIG. 8

Start

S100
Transmitter-receiver unit is turned on

S102
Acquire Doppler signals

S104
Perform body motion detection and breathing detection

S106
Is breathing detection cycle completed? — NO

Yes

S108
Is body motion or breathing movement obtained? — NO

Yes

S110
Is body motion obtained? — Yes

NO

S122
Single or plural occupant(s)

S112
Are plural breathing movements obtained? — NO

Yes

S114
Plural occupants

S120
Single occupant

S124
No occupants

S116
Estimate number of occupants

S118
Update (output) occupant information

S126
Is transmitter-receiver unit turned off? — NO

Yes

End

17

Europäisches
Patentamt
European
Patent Office
Office européen
des brevets

# EUROPEAN SEARCH REPORT

Application Number

EP 19 19 2573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/143786 A1 (KARNER GEORG [AT]) 7 June 2012 (2012-06-07) * paragraphs [0029], [0036], [0037]; figures 4, 8 * | 1-3 | INV. G01S7/41 G01S13/56 G01S7/292 G01S7/35 |
| A | WO 2008/001092 A2 (CAMBRIDGE CONSULTANTS [GB]; BURCHETT MICHAEL HUGH [GB] ET AL.) 3 January 2008 (2008-01-03) * page 24, lines 15-18 * * page 42, lines 26-35 * | 1-3 | |
| A,D | "A Simple Parameter Estimation Method for Periodic Signals Applicable to Vital Sensing Using Doppler Sensors", SICE JOURNAL OF CONTROL, MEASUREMENT, AND SYSTEM INTEGRATION, vol. 10, no. 5, September 2017 (2017-09), pages 378-384, XP002796168, * page 379 - page 381; figures 2, 4-6 * | 1-3 | |

TECHNICAL FIELDS
SEARCHED (IPC)

G01S

The present search report has been drawn up for all claims

| Place of search | Date of completion of the search | Examiner |
|---|---|---|
| Munich | 3 December 2019 | Ferrara, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 2573

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2019

| Patent document cited in search report | | | Publication date | Patent family member(s) | | | Publication date |
|---|---|---|---|---|---|---|---|
| US 2012143786 | A1 | | 07-06-2012 | AU | 2011226831 | A1 | 21-06-2012 |
| | | | | CA | 2751960 | A1 | 07-06-2012 |
| | | | | CN | 102542619 | A | 04-07-2012 |
| | | | | DK | 2472289 | T3 | 08-04-2013 |
| | | | | EP | 2472289 | A1 | 04-07-2012 |
| | | | | ES | 2402106 | T3 | 29-04-2013 |
| | | | | NZ | 595246 | A | 30-03-2012 |
| | | | | PL | 2472289 | T3 | 28-06-2013 |
| | | | | PT | 2472289 | E | 02-04-2013 |
| | | | | SI | 2472289 | T1 | 31-05-2013 |
| | | | | US | 2012143786 | A1 | 07-06-2012 |
| | | | | ZA | 201106797 | B | 28-08-2012 |
| WO 2008001092 | A2 | | 03-01-2008 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Simple Parameter Estimation Method for Periodic Signals Applicable to Vital Sensing Using Doppler Sensors. *SICE Journal of Control, Measurement, and System Integration,* September 2017, vol. 10 (5), 378-384